# EUROPÄISCHE PATENTANMELDUNG

(11) **EP 1 411 466 A1**
(43) Veröffentlichungstag der Anmeldung: **21.04.2004**
(21) Anmeldenummer: 03023564.2
(22) Anmeldetag: 16.10.2003
(51) Int. Cl.: G06K 19/077, G06K 19/07

(54) **Schicht mit Funktionsmodulen zur Integration in eine Multifunktionskarte**

(30) Priorität: 17.10.2002 DE 10248393
(71) Anmelder: Giesecke & Devrient GmbH, 81677 München (DE)
(72) Erfinder: Hohmann, Arno, 81369 München (DE); Hoppe, Joachim, 81377 München (DE)

(57) **Zusammenfassung**

Eine Multifunktionskarte, insbesondere Chipkarte mit Display und weiteren elektronischen Bauelementen, ist modulweise aufgebaut. Die einzelnen Funktionsmodule und ein den Funktionsmodulen gemeinsames Steuermodul sind über ein Leiterbahninlett untereinander elektrisch leitend verbunden. Alle für die Funktionalität der Funktionsmodule erforderlichen Funktionselemente sind Bestandteile der Funktionsmodule oder zumindest des gemeinsamen Steuermbduls. Das Leiterbahninlett und die Module besitzen standardisierte Schnittstellen, so daß eine Weiterentwicklung einzelner Module keine Abänderung anderer Module bedingt.

## Beschreibung

Die Erfindung betrifft ein Funktionsinlett für eine Multifunktionskarte, d.h. einen tragbaren Datenträger, insbesondere eine Chipkarte, mit weiteren elektronischen Bauelementen wie zum Beispiel Display, Biometriesensor, Taster, Tastatur, Touch-Screen, Batterie und dergleichen, sowie eine Multifunktionskarte mit einem solchen Funktionsinlett.

Derartige Karten sind beispielsweise als Ausweiskarten, Kreditkarten, Telefonkarten, Fahrkarten oder sogenannte "elektronische Geldbörsen" für den bargeldlosen Zahlungsverkehr einsetzbar.

Der Aufwand für die Entwicklung von Funktionsinletts für solche Karten nimmt mit jeder zusätzlichen Kartenfunktion überproportional zu, weil bereits geringfügige technische Weiterentwicklungen oder Änderungen einzelner zur Realisierung dieser Funktionen verwendeten Bauelemente häufig ein vollständiges Neudesign des Inletts mit den darauf verlaufenden Leiterbahnverbindungen und damit einhergehenden Korrekturschleifen verursachen, bis das angepasste Inlett fehlerfrei funktioniert. Außerdem ist die Ausfallwahrscheinlichkeit eines Inletts mit einer Vielzahl von Funktionen aufgrund der Anzahl der dafür benötigten Bauelemente größer als bei Inletts mit weniger Funktionen, so daß mit der Anzahl der Kartenfunktionen auch der Produktionsausschuß und damit die Herstellungskosten steigen.

Die Auswahlwahrscheinlichkeit des Inletts läßt sich reduzieren, wenn die für die unterschiedlichen Funktionalitäten jeweils erforderlichen Bauelemente in separate Funktionsmodule zusammengefaßt werden, wie zum Beispiel in ein Karten-Chipmodul zur Übertragung von Daten und/ oder Energie zwischen der Karte und einem externen Kartenterminal, in ein Displaymodul zur visuellen Anzeige von Daten, in ein Sensormodul zum Erfassen und Verarbeiten eines biometrischen Merkmals, in ein Tastaturmodul oder ein Touch-Screen-Modul zum Erfassen und Verarbeiten von manuell eingegebenen Daten, in ein Energiequellenmodul wie Batteriemodul oder Solarzellenmodul und dergleichen. Solche Module können vor ihrem Einbau ins Funktionsinlett auf korrekte Funktionsfähigkeit überprüft werden. Auch der Fertigungsaufwand bei der Kartenherstellung wird durch die Verwendung von Funktionsmodulen wegen ihrer einfacheren Handhabbarkeit vereinfacht.

Allerdings steht eine Modullösung bei Neuentwicklungen, wie zum Beispiel der Integration eines Displays in den Kartenaufbau, nicht sofort zur Verfügung. Jede Weiterentwicklung der Displaytechnologie bedingt ein Neudesign des Funktionsinletts und der darauf verlaufenden, die Bauelemente für die Displayfunktionen verbindenden Leiterbahnen. In der Regel müssen auch diskrete Bauteile untergebracht werden, wozu der Einsatz spezieller flexibler Leiterbahnfolien erforderlich wird, die in die Karte integriert und auf denen alle erforderlichen Bauelemente untergebracht werden. Solche Leiterbahnfolien sind nicht nur teuer sondern auch schwer in den Kartenaufbau integrierbar, da sie aus nicht laminierfähigem Material bestehen. Eine Serienfertigung ist mit dieser Technologie nicht denkbar.

Problematisch ist die Entwicklung und Herstellung eines Funktionsinletts mit mehreren Funktionalitäten aber selbst dann, wenn für jede Funktionalität ein separates Funktionsmodul vorhanden ist. Denn mit einer zunehmenden Anzahl an Funktionsmodulen müssen diese immer komplexer und aufwendiger sein, um mit allen anderen in der Karte integrierten Funktionsmodulen zusammenwirken zu können. Hinzu kommt, daß einzelne Funktionsmodule je nach Verwendungszweck der Karte unterschiedliche Spezifikationen besitzen. Die Funktionsmodule müssen daher so universell sein, daß sie jeden Verwendungszweck bei jeder möglichen Modulkombination abdecken. Derartige Funktionsmodule sind sehr aufwendig und für kleinere und mittlere Serienfertigungen nicht rentabel herstellbar.

Anstelle solcher aufwendiger universeller Funktionsmodule können die Funktionsmodule auch für jeden speziellen Kartentyp abhängig vom Verwendungszweck und der jeweiligen Modulkombination der Karte individuell gestaltet sein. Eine solche Individualisierung der Funktionsmodule lohnt sich aber nur für Großserienfertigungen und ist für kleinere und mittlere Serienfertigungen nicht rentabel.

Aufgabe der vorliegenden Erfindung ist, ein Funktionsinlett für eine Multifunktionskarte vorzuschlagen, welches die Entwicklung und auch die Serienfertigung von kleinen und mittleren Kartenserien mit mehreren Funktionalitäten, wie etwa Chipkarten mit Display, erleichtert.

Diese Aufgabe wird gelöst durch ein Funktionsinlett sowie eine mit einem solchen Funktionsinlett ausgestattete Multifunktionskarte gemäß den nebengeordneten Ansprüchen. In davon abhängigen Ansprüchen sind vorteilhafte Weiterbildungen und Ausgestaltungen der Erfindung angegeben.

Erfindungsgemäß ist vorgesehen, daß jedes Funktionsmodul ausschließlich solche Funktionselemente besitzt, die für die Funktionalität des jeweiligen Funktionsmoduls tatsächlich erforderlich sind. Eine Neugestaltung des Funktionsinletts infolge einer Weiterentwicklung der Kartentechnologie kann dadurch weitgehend reduziert werden, weil sich Änderungen innerhalb eines Funktionsmoduls nicht auf die Funktionalität eines anderen Funktionsmoduls auswirken. Stattdessen sind alle diejenigen Funktionselemente, die zur Koordinierung der Funktionsmodule erforderlich sind, in einem separaten Steuermodul nach Art einer CPU zusammengefasst, welche im Idealfall lediglich einen Steuerchip enthält. Eine Weiterentwicklung einzelner Funktionsmodule erfordert dann allenfalls eine Anpassung des Steuermoduls ohne wesentliche Auswirkungen auf die Gestaltung des Funktionsinletts.

Insbesondere ist vorgesehen, daß alle für die Funktionalität der Funktionsmodule erforderlichen Funktionselemente Bestandteil der Funktionsmodule oder zumindest Bestandteil des Steuermoduls sind. Dies bietet den Vorteil, daß keine separaten elektronischen Bauelemente auf dem Funktionsinlett montiert und kontaktiert werden müssen. Sofern ein für die Funktionalität eines speziellen Funktionsmoduls erforderliches elektronisches Bauelement beispielsweise aus verfahrenstechnischen Gründen noch nicht als integraler Bestandteil des Funktionsmoduls realisierbar ist, bleibt dieses Bauelement solange Bestandteil des Steuermoduls, bis seine Integration in das zugehörige Funktionsmodul technisch realisierbar ist. Die Gestaltung des Funktionsinletts läßt sich dadurch auf die zur Kontaktierung und elektrischen Verbindung der Funktionsmodule notwendigen Leiterbahnverbindungen zum gemeinsamen Steuermodul reduzieren. Alle Module können dann in einfacher Weise auf einem gemeinsamen Leiterbahnsubstrat appliziert und miteinander verbunden werden, wobei dieses Leiterbahnsubstrat im wesentlichen nur Leiterbahnen mit entsprechenden Kontaktstellen besitzen muß, da alle elektronischen Bauelemente in den Modulen integriert sind.

Die Leiterbahnfolie kann insbesondere aus einem Karten-Kunststoff bestehen, insbesondere also aus PVC, ABS oder PET. Die Leiterbahnstrukturen können auf dieses Material in einfacher Weise beispielsweise von einem Transferband im Prägeverfahren übertragen werden.

Ein erfindungsgemäßes "Modul" im Sinne der vorliegenden Erfindung zeichnet sich mithin dadurch aus, daß es bis zur Verbindung mit dem Leiterbahninlett und/oder mit der Karte eine selbständig handhabbare Baueinheit mit einer Mehrzahl von in der Baueinheit zusammengefassten Funktionselementen bildet.

"Funktionselemente" im Sinne der vorliegenden Erfindung sind die für die jeweilige Funktionalität der einzelnen Module erforderlichen elektronischen Bauelemente, gegebenenfalls einschließlich der für diese Funktionalität erforderlichen System- und/oder Anwendungssoftware. Eine Ausnahme bildet eine Batterie insofern, als sie selbst ein Funktionselement darstellt und daher vorzugsweise Bestandteil eines der Funktionsmodule ist, welches aber aufgrund ihrer vergleichsweise großen Abmessungen selbst ein Modul im Sinne eines Energie liefernden Funktionsmoduls ähnlich einem Solarzellenmodul darstellen kann.

Im folgenden soll ferner unter dem Begriff "Inlett" eine selbständig handhabbare Schicht zur Integration in eine Karte verstanden werden. Ein Inlett kann beispielsweise zwischen zwei Schichten eines mehrschichtigen Folienlaminats oder in einen spritzgegossenen Kartenkörper integriert werden.

Aufgrund der Integration aller Fünktionselemente in die Funktionsmodule und in das Steuermodul und sich dem daraus ergebenden Vorteil, daß das Funktionsinlett für die Montage der Module lediglich mit Leiterbahnstrukturen und Kontaktschnittstellen versehen werden muß, ist eine weitere Verringerung des Aufwands für die Anpassung und Weiterentwicklung des Funktionsinletts möglich, indem die Kontaktschnittstellen standardisiert werden. Durch diese Standardisierung der Schnittstellen wird erreicht, daß eine Anpassung oder Weiterentwicklung eines Funktionsmoduls keine Veränderung der auf dem Funktionsinlett vorgesehenen Schnittstellen und Leiterbahnstrukturen bedingt. Es ist nur darauf zu achten, daß auch bei einer Weiterentwicklung des jeweiligen Funktionsmoduls die standardisierten Schnittstellen am Funktionsmodul und am Steuermodul beibehalten werden. Die Kontaktierung der Funktionsmodule auf dem Funktionsinlett bleibt dadurch unverändert, wodurch die Fertigung wesentlich leichter automatisierbar und adaptierbar wird.

Als Konsequenz aus der Standardisierung der Schnittstellen können keine Funktionselemente aus einem Funktionsmodul in das Steuermodul verlagert werden, die eine Anpassung der Leiterbahnstruktur des Funktionsinletts mit sich bringen. Allerdings ist die Verlagerung von Anwendungssoftware, Speichern und anderen digitalen Funktionselementen, beispielsweise des Chipmoduls, in das Steuermodul ohne weiteres möglich.

Bevorzugte Ausführungsformen sehen vor, daß eine Batterie und/oder ein Taster im Steuermodul integriert sind, wodurch der Karten-Fertigungsaufwand weiter reduziert und der auf der Kartenoberfläche verfügbare Platz optimal genutzt wird.

Nachfolgend wird die Erfindung beispielhaft anhand der begleitenden Zeichnungen beschrieben. Es zeigen:
- Figur 1: schematisch die Koordination verschiedener Funktionsmodule über ein Steuermodul,
- Figur 2: ein Displaymodul,
- Figur 3: ein Funktionsinlett mit Verdrahtung,
- Figuren 4a, 4b: ein Steuermodul mit integriertem Taster,
- Figur 5: ein Mehrfachnutzen mit Leiterbahninletts,
- Figuren 6a bis 6c: verschiedene Entwicklungsstufen eines Steuermoduls, und
- Figur 7: ein Steuermodul mit integrierter Batterie.

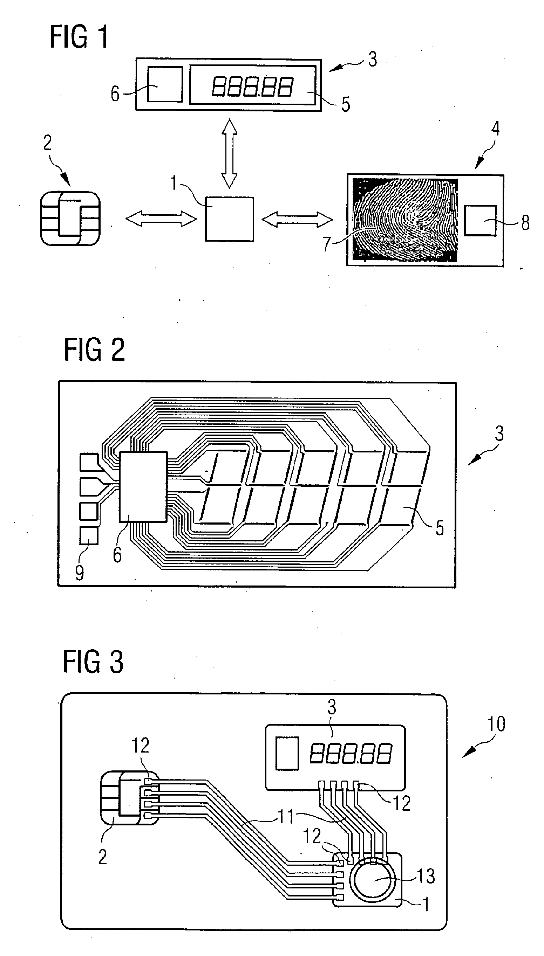

Figur 1 zeigt schematisch ein Ausführungsbeispiel, in dem drei Funktionsmodule 2, 3, 4 mittels eines gemeinsamen Steuermoduls 1 koordiniert werden. Dargestellt sind ein typisches Karten-Chipmodul 2, ein Displaymodul 3 und ein Sensormodul 4.

Das Karten-Chipmodul 2 weist die üblichen Funktionalitäten auf, z.B. für die Verwendung als elektronische Geldbörse. Es ist für den kontaktbehafteten Datentransfer mit Kontaktflächen auf der Oberfläche des Karten-Chipmoduls versehen. Alternativ oder zusätzlich könnten in dem Chipmodul oder in einem separaten Chipmodul eine Transponderspule für den kontaktlosen Daten-/ oder Energietransfer vorgesehen sein.

Das Displaymodul 3 umfaßt eine Anzeige 5 zur visuellen Anzeige von Daten sowie einen Ansteuerbaustein 6, zur Ansteuerung der einzelnen, hier nicht im Detail dargestellten, zu aktivierenden Bereiche der Anzeige 5. Der Ansteuerbaustein beinhaltet alle für den Betrieb des Displays erforderlichen Funktionen, wie zum Beispiel einen Spannungswandler und eine Steuerung, z.B. durch Multiplexing oder mittels spezieller Steuersignale.

Bei dem Sensormodul 4 handelt es sich um einen Fingerabdrucksensor mit einer Sensorfläche 7 und einem Ansteuerbaustein 8 zur Verarbeitung der erfassten biometrischen Daten.

Das Steuermodul 1 umfaßt zumindest einen Chip zur koordinierenden Steuerung der Module 2, 3, 4 und gegebenenfalls weitere für die Funktionalität einzelner oder mehrerer Funktionsmodule notwendige Funktionselemente, insbesondere digitale Funktionselemente wie Datenspeicher und dergleichen.

In Figur 2 ist das Displaymodul 3 beispielhaft vergrößert in Draufsicht dargestellt. Durch die transparenten Displaysubstrate hindurch sind dabei die elektronischen Bauteile des Displays zu erkennen. Über eine standardisierte Schnittstelle 9 erhält das Display 3 von dem hier nicht dargestellten Steuermodul 1 serielle Signale mit den auf dem Display 3 anzuzeigenden Informationen. Diese seriellen Signale werden in dem Ansteuerbaustein 6 in parallele Signale umgewandelt, um die für die Darstellung der gewünschten Information konkreten Bereiche der Anzeige 5 zu aktivieren.

In entsprechender Weise dient der Ansteuerbaustein 8 des in Figur 1 dargestellten Fingerabdrucksensors 4 dazu, die an der Sensorfläche 7 parallel erzeugten Sensorsignale zu verarbeiten und über eine nicht dargestellte standardisierte Schnittstelle als serielle Signale an das Steuermodul 1 zu liefern. Die Anwendungssoftware einschließlich etwaiger Datenspeicher zum Vergleich des erfaßten Fingerabdrucks mit einem individuellen gespeicherten Fingerabdruck und der dazu erforderlichen Software können sich beispielsweise in dem Ansteuerbaustein 8 des Sensormoduls 4 befinden, sind aber vorzugsweise im Steuermodul 1 integriert, da die Auswertung der Sensorinformationen unabhängig ist von der Funktionalität des Sensormoduls 4.

Zur elektrischen Verbindung der Funktionsmodule 2, 3, 4 mit dem Steuermodul 1 ist innerhalb der Karte ein Leiterbahninlett 10 integriert, welches vorzugsweise aus typischem Kartenmaterial wie PVC, ABS oder PET besteht. Ein solches Inlett kann auf herkömmliche Weise ohne großen Designund Fertigungsaufwand realisiert werden, da es lediglich Verbindungsleitungen aus wenigen, relativ groben Strukturen aufweist. Dies ist in Figur 3 anhand eines Leiterbahninletts 10 mit Leiterbahnen 11 gezeigt. Die Leiterbahnen 11 weisen standardisierte Schnittstellen in Form von gleichmäßig zueinander beabstandeten, vergleichsweise großen und daher leicht kontaktierbaren Kontaktflächen 12 auf. An jeweils einem Ende der Leiterbahnen 11 sind die Funktionsmodule, im konkreten Fall ein Karten-Chipmodul 2 und ein Displaymodul 3, und an den jeweils anderen Enden der Leiterbahnen 11 das Steuermodul 1 jeweils über die Kontakte 12 angeschlossen. Die Kontaktierung erfolgt in herkömmlicher Weise, indem die Module 1, 2, 3 auf das Leiterbahninlett oder in Aussparungen des Leiterbahninletts 10 so auf- bzw. eingesetzt werden, daß die standardisierten Schnittstellen der Module mit den standardisierten Schnittstellen des Leiterbahninletts 10, das heißt mit den Kontakten 12, in Kontakt kommen. Vorzugsweise wird zur Kontaktierung ein elektrisch leitfähiger Kleber verwendet.

Obwohl in Figur 3 eine sternförmige Topologie gezeigt ist, ist ein BusSystem ebenso realisierbar. Grundsätzlich ist die elektrische Verbindung der Funktionsmodule untereinander auch als ringförmige Topologie realisierbar.

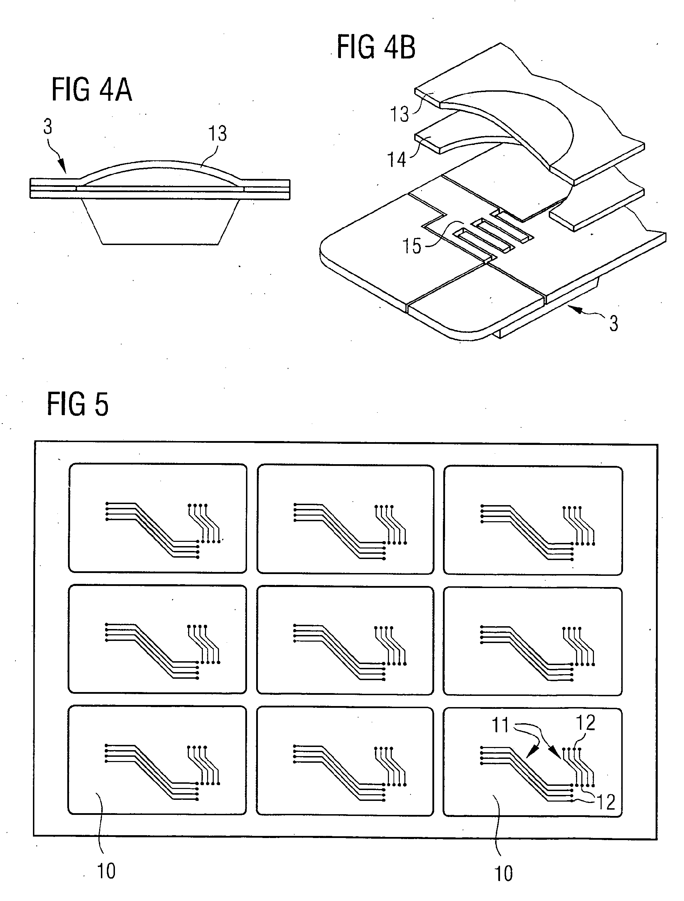

Das Steuermodul 1, das im wesentlichen alle anwendungsspezifischen Funktionen enthält und mit dem Chipmodul 2 und dem Displaymodul 3 über die standardisierten Schnittstellen 12 verbunden ist, besitzt in dem in Figur 3 dargestellten Ausführungsbeispiel einen optionalen Taster 13. Ein solches Steuermodul ist beispielhaft in Figur 4a im Querschnitt und in Figur 4b als perspektivische Explosionsdarstellung gezeigt. Auf der Oberseite des Steuermoduls 1 befindet sich der domförmige Taster 13 mit einer zwischen der Oberseite des Steuermoduls und dem Domtaster liegenden Abstandhalterfolie 14. Die Oberseite des Steuermoduls 1 weist Leitstrukturen 15 auf, welche zur Aktivierung des Steuermoduls durch Herunterdrücken des Domtasters 13 kurzgeschlossen werden. Auf diese Weise läßt sich die Karte ein- und ggf. auch wieder ausschalten.

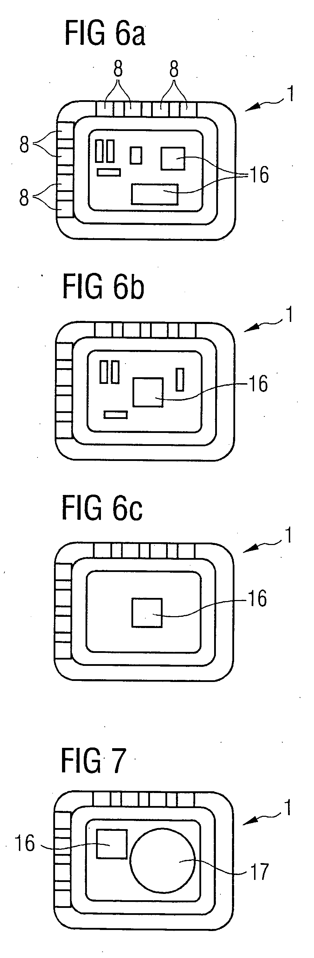

Figur 5 zeigt eine Mehrnutzenfolie, aus der eine Mehrzahl von Leiterbahninletts 10 ausstanzbar ist. Innerhalb der angedeuteten Konturen der auszustanzenden Leiterbahninletts 10 sind Leiterbahnen 11 mit standardisierten Schnittstellen bzw. Kontakten 12 zur Kontaktierung der Funktionsmodule vorbereitet. Das Funktionsinlett kann mit den Funktionsmodulen kontaktiert und anschließend mit weiteren Kartenfolien laminiert oder mit Kunststoff umspritzt werden. Üblicherweise wird aber zunächst das Leiterbahninlett in die Karte integriert, beispielsweise durch Laminierung mit weiteren Kartenschichten, und die Kontakte 12 werden freigelegt, beispielsweise durch Fräsen oder Ausstanzen der entsprechenden Bereiche aus dem darüber liegenden Kartenmaterial. Alternativ können diese Aussparungen in den Kartenschichten bereits vor der Laminierung ausgestanzt werden. Die Kontaktierung der Module mit den freiliegenden Kontakten 12 erfolgt daran anschließend beim Einbau der Module in den Kartenkörper.

Leiterbahninletts mit standardisierten Schnittstellen bieten den Vorteil, daß die daran anzuschließenden Funktionsmodule ohne Änderung der anderen Funktionsmodule austauschbar sind. Dies ist besonders von Vorteil bei Pilot- und Kleinserien und auch bei der Entwicklung von neuen und Weiterentwicklung von bereits im Einsatz befindlichen Kartentypen. So besteht die Möglichkeit, beispielsweise das Steuermodul zunächst aus diskreten elektronischen Bauelementen aufzubauen und diese im Rahmen einer Weiterentwicklung schrittweise durch ASICs und schließlich durch einen einzigen Steuerchip zu ersetzen, ohne die Struktur oder elektrische Anbindung anderer Elemente zu beeinflussen. Dies ist beispielhaft anhand der Figuren 6a bis 6c dargestellt. Figur 6a zeigt ein Steuermodul in einem frühen Entwicklungsstadium mit standardisierten Kontakten 12, zwei Chips 16 und weiteren diskreten Bauteilen 17, beispielsweise Widerständen, Dioden und dergleichen. Figur 6b zeigt eine Weiterentwicklung des Steuermoduls 1 mit nur noch einem Chip 16 und weiteren diskreten Bauteilen. Figur 6c zeigt eine mögliche Endausbaustufe des weiterentwickelten Steuermoduls 1 mit nur noch einem einzigen Chip 16. Die modulare Bauweise des Steuermoduls und der Funktionsmodule ermöglicht somit, insbesondere in Verbindung mit standardisierten Schnittstellen, einen unkomplizierten Übergang von der Entwicklungsphase über die Kleinserienfertigung zur Massenfertigung, indem die Funktionalität der Module schrittweise angepaßt werden kann.

Figur 7 zeigt eine vorteilhafte Ausgestaltung, bei der eine Batterie 17 in das Steuermodul 1 integriert ist. Gegebenenfalls kann auch umgekehrt eine Batterie zu einem Steuermodul abgewandelt werden. Auf diese Weise resultieren sogenannte "Mikrobatterien" mit Zusatzfunktionen, etwa Mikrobatterien, die zur Pufferung von Speicherinhalten in RAM-Speichern verwendbar sind.

## Patentansprüche

1. Funktionsinlett für eine Multifunktionskarte, insbesondere Chipkarte mit weiteren elektronischen Bauelementen wie Display, Biometriesensor, Taster, Tastatur, Touch-Screen, Batterie oder dergleichen, umfassend mindestens zwei Funktionsmodule (2, 3, 4) und ein für die Funktionsmodule gemeinsames Steuermodul (1), wobei
- jedes Funktionsmodul nur solche Funktionselemente (5, 6, 9; 7, 8) besitzt, die für die Funktionalität des jeweiligen Funktionsmoduls (2 bzw. 3) erforderlich sind,
- das Steuermodul (1) alle Funktionselemente (16, 17) besitzt, die zur Koordinierung der Funktionsmodule (2, 3, 4) erforderlich sind, und gegebenenfalls weitere Funktionselemente besitzt, die für die Funktionalität der Funktionsmodule erforderlich sind, und
- alle für die Funktionalität der Funktionsmodule (2, 3, 4) erforderlichen Funktionselemente Bestandteil der Funktionsmodule und gegebenenfalls des Steuermoduls sind.

2. Funktionsinlett nach Anspruch 1, **dadurch gekennzeichnet, daß** das Steuermodul (1) und die Funktionsmodule (2, 3, 4) jeweils standardisierte Schnittstellen (12) besitzen, über welche die Funktionsmodule und das Steuermodul mittels einer ebenfalls mit standardisierten Schnittstellen (8) ausgestatteten Leiterbahnfolie (10) untereinander elektrisch verbunden sind.

3. Funktionsinlett nach Anspruch 2, **dadurch gekennzeichnet, daß** das Leiterbahnsubstrat (10) eine Leiterbahnfolie aus einem typischen Kartenkunststoffmaterial, insbesondere PVC, ABS oder PET.

4. Funktionsinlett nach einem der Ansprüche 1 bis 3, **dadurch gekennzeichnet, daß** die Funktionsmodule ausgewählt sind aus der Gruppe von Funktionsmodulen umfassend:
- ein Karten-Chipmodul zur Übertragung von Daten und/ oder Energie von und/ oder zu einem externen Gerät und zum Verarbeiten von Daten,
- ein Displaymodul zur visuellen Anzeige von Daten,
- ein Sensor-Modul zum Erfassen und Verarbeiten eines biometrischen Merkmals,
- ein Taster zur Aktivierung- und/oder Deaktivierung des Steuermoduls,
- ein Tastaturmodul oder ein Touch-Screen-Modul zum Erfassen und Verarbeiten von manuell eingegebenen Daten, und
- ein Energiequellenmodul, insbesondere Batteriemodul oder Solarzellenmodul.

5. Funktionsinlett nach einem der Ansprüche 1 bis 4, **dadurch gekennzeichnet, daß** eine Batterie (17) im Steuermodul (1) integriert ist.

6. Funktionsinlett nach einem der Ansprüche 1 bis 5, **dadurch gekennzeichnet, daß** ein Taster (13) im Steuermodul (1) integriert ist.

7. Multifunktionskarte umfassend ein Funktionsinlett nach einem der Ansprüche 1 bis 6.

8. Multifunktionskarte nach Anspruch 7, **dadurch gekennzeichnet, daß** das Funktionsinlett Bestandteil einer mehrschichtig laminierten Karte ist.

9. Multifunktionskarte nach Anspruch 8, **dadurch gekennzeichnet, daß** das Funktionsinlett Bestandteil einer spritzgegossenen Karte ist.
